Europäisches Patentamt

European Patent Office

Office européen des brevets

(11) Veröffentlichungsnummer: **0 231 226**
**B1**

(19)

(12) **EUROPÄISCHE PATENTSCHRIFT**

(45) Veröffentlichungstag der Patentschrift:
**03.01.90**

(51) Int. Cl.⁵ : **G 02 C   7/10, G 02 B   1/10**

(21) Anmeldenummer : **86904108.7**

(22) Anmeldetag : **21.07.86**

(86) Internationale Anmeldenummer :
**PCT/DE 86/00299**

(87) Internationale Veröffentlichungsnummer :
**WO/8700641 (29.01.87 Gazette 87/03)**

(54) **REFLEXIONSVERMINDERNDER BELAG FÜR EIN OPTISCHES ELEMENT AUS ORGANISCHEM MATERIAL.**

(30) Priorität : **19.07.85 DE 3525892**

(43) Veröffentlichungstag der Anmeldung :
**12.08.87 Patentblatt 87/33**

(45) Bekanntmachung des Hinweises auf die Patenterteilung : **03.01.90 Patentblatt 90/01**

(84) Benannte Vertragsstaaten :
**AT BE CH DE FR GB IT LI LU NL SE**

(56) Entgegenhaltungen :
**EP–A– 0 140 096**
**US–A– 4 045 125**
**US–A– 4 070 097**
**US–A– 4 313 647**
**US–E–   27 473**

(73) Patentinhaber : **Optische Werke G. Rodenstock**
**Isartalstrasse 43**
**D-8000 München 5 (DE)**

(72) Erfinder : **MELZIG, Manfred**
**Sommerstr. 20**
**D-8031 Wessling (DE)**
Erfinder : **EFFER, Erhard**
**Bgm.-Grenzebach-Str. 39**
**D-8134 Pöcking (DE)**

(74) Vertreter : **Münich, Wilhelm, Dr. et al**
**Kanzlei Münich, Steinmann, Schiller Willibaldstrasse**
**36/38**
**D-8000 München 21 (DE)**

# EP 0 231 226 B1

## Beschreibung

Die Erfindung bezieht sich auf einen reflexionsvermindernden Belag für ein optisches Element aus organischem Material mit phototropen Eigenschaften, und insbesondere auf ein derartiges Brillenglas.

In der Vergangenheit sind eine Reihe von Vorschlägen bekanntgeworden, optische Elemente aus organischem Material und insbesondere Brillengläser aus organischem Material phototrop auszugestalten. Unter « phototrop » wird hierbei die Eigenschaft verstanden, daß sich der Farbeindruck und die Eindunkelung des optischen Elements mit der Beleuchtungsstärke, d. h. der Strahlungsintensität ändert.

Die phototropen Eigenschaften von optischen Elementen aus organischem Material werden in der Regel dadurch erzielt, daß organische Substanzen mit phototropen Eigenschaften, beispielsweise Spirooxazin-Verbindungen in die Matrix des optischen Elements eingebracht oder auf das optische Element aufgebracht werden.

Andererseits werden gegenwärtig die meisten Brillengläser mit einem reflexionsvermindernden Belag versehen, der zumeist aus mehreren hoch- und niederbrechenden Schichten besteht. In der Literatur ist bislang der Frage, welcher reflexionsvermindernde Belag für ein Brillenglas aus organischem Material mit phototropen Eigenschaften am besten geeignet ist, keine Beachtung geschenkt. Bei tatsächlich ausgeführten Brillengläsern aus organischem Material mit phototropen Eigenschaften werden die gleichen reflexionsvermindernden Beläge aufgebracht wie sie auch für Brillengläser aus organischem Material ohne phototrope Eigenschaften verwendet werden.

Erfindungsgemäß ist nun erkannt worden, daß sich die Eigenschaften von Brillengläsern aus organischem Material, in die phototrope Substanzen eingebracht oder auf die phototrope Substanzen aufgebracht sind, durch geeignete Wahl eines reflexionsvermindernden Belags beeinflussen lassen.

Der Erfindung liegt deshalb die Aufgabe zugrunde, einen reflexionsvermindernden Belag für ein optisches Element aus organischem Material mit phototropen Eigenschaften anzugeben.

Eine erfindungsgemäße Lösung dieser Aufgabe ist mit ihren Weiterbildungen in den Patentansprüchen gekennzeichnet.

Erfindungsgemäß ist erkannt worden, daß ein reflexionsvermindernder Belag aus mehreren Schichten für ein optisches Element aus organischem Material mit phototropen Eigenschaften folgende Charakteristika besitzen muß :

1. Im Wellenlängenbereich zwischen 330 nm und 380 nm sollte die Reflexion möglichst niedrig sein, um eine ausreichende Anregung der phototropen Substanz bzw. bei Einbringung von mehreren Substanzen der verschiedenen Substanzen zu gewährleisten.

2. Im Wellenlängenbereich unterhalb 330 nm sollte die Reflexion stark ansteigen, da Strahlung in diesem Wellenlängenbereich, die den phototropen Effekt ebenfalls anregt, die Lebensdauer des Photoeffekts — wie ebenfalls erfindungsgemäß erkannt worden ist — herabsetzt.

3. Im Wellenlängenbereich unterhalb von 290 nm spielen die Reflexionseigenschaften des reflexionsvermindernden Belags keine entscheidende Rolle mehr, da die Absorptionseigenschaften der Atmosphäre verhindern, daß eine derartige Strahlung in nennenswertem Umfang die organischen Substanzen anregen und gegebenenfalls schädigen kann.

Der erfindungsgemäß vorgesehene reflexionsvermindernde Belag unterscheidet sich damit von den bislang sowohl für Brillengläser aus Kunststoff ohne phototrope Eigenschaften als auch für solche mit phototropen Eigenschaften verwendeten Belägen dadurch, daß er definierte Reflexionseigenschaften nicht nur im Bereich des sichtbaren Lichts von 380 nm bis 780 nm, sondern auch im Bereich zwischen 290 nm und 380 nm hat. Unterhalb von 380 nm wurde bislang dem Kurvenverlauf keine Beachtung geschenkt.

Der erfindungsgemäße Belag für ein optisches Element aus organischem Material und insbesondere ein Brillenglas mit phototropen Eigenschaften hat damit folgende Vorteile :

Er gewährleistet eine ausreichende Anregung des phototropen Effekts in Abhängigkeit von der jeweiligen Beleuchtungsstär-ke. Damit ist bei Verwendung des erfindungsgemäßen reflexionsvermindernden Belags die Kinetik des phototropen Effekts besser als bei Verwendung von herkömmlichen Belägen.

Er verhindert, daß durch Anregung des phototropen Effekts mit zu kurzwelligem Licht die Lebensdauer des phototropen Effekts herabgesetzt wird.

Darüberhinaus ergeben sich durch die Verwendung des erfindungsgemäßen phototropen Belags noch weitere unerwartete Vorteile :

Bedingt durch die unterschiedlichen sterischen Lagen der phototropen Moleküle in der Kunststoff-Matrix haben diese unterschiedliche Absorptions- und Kinetikeigenschaften. Durch eine geeignete Wahl der Reflexionseigenschaften des Belags läßt sich eine gezielte Anregung von in bestimmten sterischen Lagen eingebauten phototropen Molekülen und damit eine Beeinflussung der Kinetik und Farbe des phototropen Effekts erreichen.

Baut man in die Matrix des optischen Elements, das beispielsweise aus organischem Material besteht, mindestens zwei unterschiedliche phototrope Substanzen ein, die unterschiedliche Absorptionsspektren besitzen, so kann man durch die Gestaltung der Reflexionseigenschaften im Bereich zwischen 290 nm und 380 nm eine wesentliche Beeinflussung der Farbe des phototropen Effekts erreichen.

Wie weiterhin erfindungsgemäß erkannt worden ist, lassen sich die erfindungsgemäßen Eigenschaften des reflexionsvermindernden Belags für ein optisches Element aus organischem Material mit

2

phototropen Eigenschaften nur mit einem Schichtsystem mit mehr als drei Schichten erfüllen. Bevorzugte Ausführungsformen dieses Schichtsystems sind in den Ansprüchen 4 bis 6 gekennzeichnet. Bei einem Belag der fünf Schichten aufweist, die abwechselnd aus Siliziumdioxid und einem hochbrechenden Material bestehen, läßt sich der erfindungsgemäß vorgesehene Verlauf zwischen 290 nm und 380 nm nur dann befriedigend erreichen, wenn das hochbrechende Material gemäß Anspruch 5 einen Brechungsindex $n_e$ hat, der mindestens 2,0 ist.

Die Erfindung wird nachstehend anhand von Ausführungsbeispielen unter Bezugnahme auf die Zeichnung näher beschrieben, in der zeigen :

Fig. 1 einen erfindungsgemäßen Belag mit 5 Schichten, und

Fig. 2 bis 5 Reflexionskurven verschiedener Ausführungs beispiele.

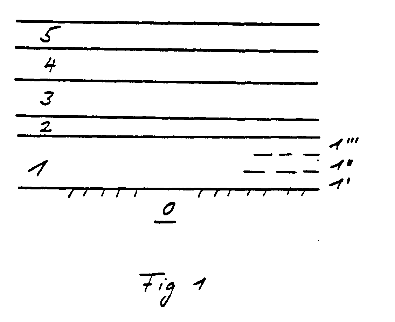

Fig. 1 zeigt einen erfindungsgemäßen Belag mit 5 Schichten, von denen die erste direkt auf dem optischen Element 0 aufgebrachte Schicht 1 aus $SiO_2$, die zweite Schicht 2 aus einem hochbrechenden Metalloxid, die dritte Schicht 3 aus $SiO_2$, die vierte Schicht 4 wiederum aus einem hochbrechenden Metalloxid und die fünfte Schicht 5 aus $SiO_2$ besteht.

Ferner ist es auch möglich, die Schicht 1 in drei Teilschichten 1', 1'', 1''' aufzuspalten, die aus $SiO_2$, einem hochbrechenden Metalloxid und $SiO_2$ bestehen.

In der nachstehenden Tabelle 1 ist für verschiedene hochbrechende Materialien (hM) der Aufbau des Schichtsystems mit 5 Schichten sowie der Brechungsindex $n_e$ des hochbrechenden Materials angegeben, d. h. der Brechungsindex für Licht mit der Wellenlänge 546,1 nm. Dabei ist vorausgesetzt, daß das Substrat 0 einen Brechungsindex von (etwa) 1,502 hat.

Tabelle 1

| hM | $Tb_2O_3$ | $Nd_2O_3$ | $Ti_2O_3$ | |
|---|---|---|---|---|
| Schicht/$n_e$ | 2,00 | 2,10 | 2,23 | |
| 1 ($SiO_2$) | 175 | 175 | 180 | nm |
| 2 (hM) | 17,3 | 14,2 | 12,9 | nm |
| 3 ($SiO_2$) | 36,4 | 37,1 | 35,3 | nm |
| 4 (hM) | 121,3 | 123,8 | 120,8 | nm |
| 5 ($SiO_2$) | 87,5 | 87,5 | 91,2 | nm |

In Tabelle 2 ist ein Ausführungsbeispiel für ein Schichtsystem mit 7 Schichten angegeben.

Tabelle 2

hM:　　　$Ti_2O_3$ ;　　$n_e$ = 2,23

1'($SiO_2$) = 50 ;　1'' (hM) = 5,2;　1''' ($SiO_2$) = 112,3

2 (hM) = 10,9;　3 ($SiO_2$) = 37,3;　4 (hM) = 115,6

5 ($SiO_2$) = 78,4

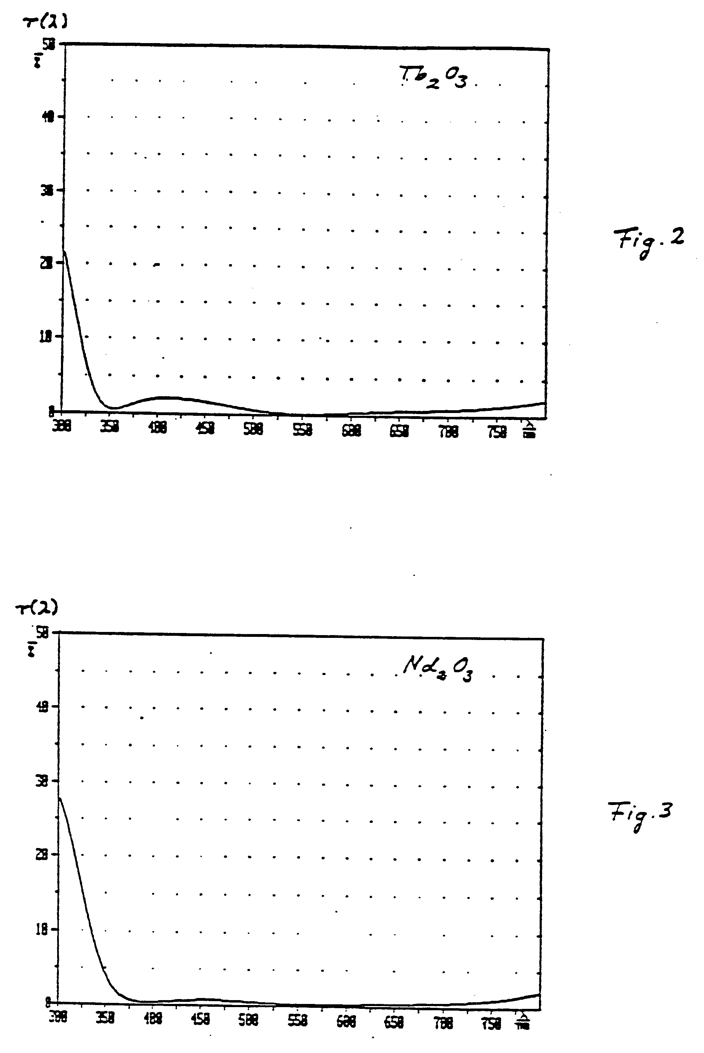

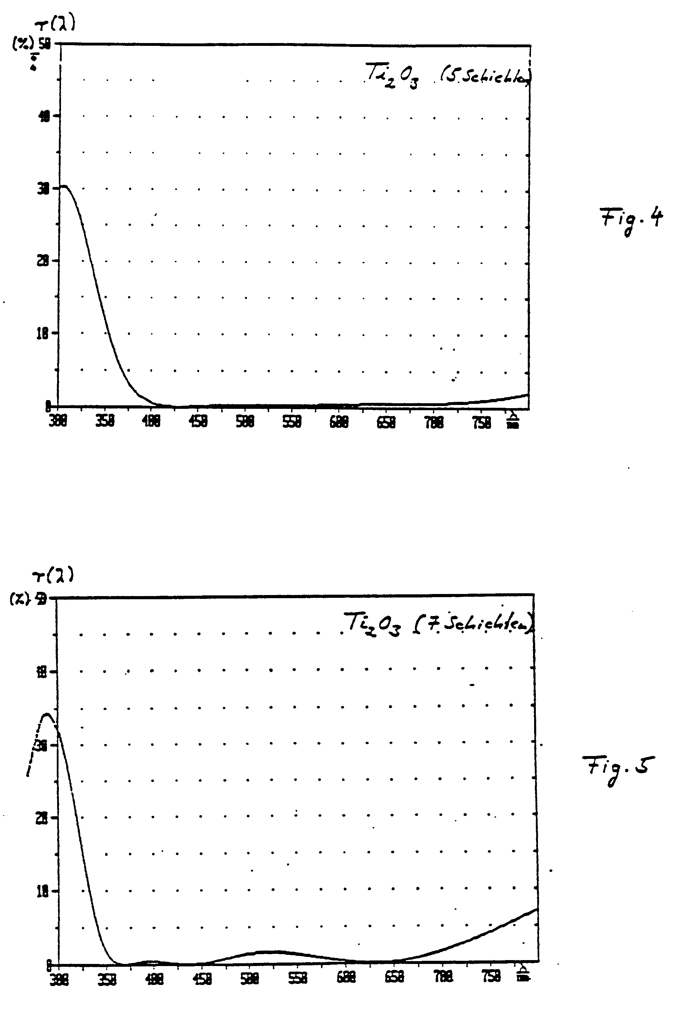

In den Figuren 2 bis 5 sind die Reflexionsfaktoren $r(\lambda)$ (in %) der in Tabelle 1 bzw. 2 angegebenen Schichtsysteme als Funktion der Wellenlänge $\lambda$ des auftreffenden Lichts angegeben. Man erkennt deutlich als gemeinsame Eigenschaft aller Schichtsysteme, daß der Maximalwert $r(\lambda)$ der Reflexion im Bereich zwischen 330 nm und 380 nm den Wert 6 % nicht übersteigt, während die gemäß

$$\overline{r}(\lambda) = \int r(\lambda)\alpha\lambda / \int \alpha\lambda$$

über diesen Wellenlängenbereich gemittelte Reflexion $\overline{r}(\lambda)$ kleiner als 3 % ist. Im Bereich zwischen 290 nm und 330 nm übersteigt der Maximalwert der Reflexion den Wert 25 %, wobei die über diesen Bereich gemittelte Reflexion größer als 15 % ist. Der Abfall unter 290 nm, der bei einigen Reflexionskurven auftritt, ist bedeutungslos, da Strahlung in diesen Wellenlängenbereich aufgrund der Absorptionseigenschaften der Atmosphäre keine Rolle spielt.

Vorstehend ist die Erfindung exemplarisch beschrieben worden. Es versteht sich von selbst, daß innerhalb des erfindungsgemäßen Grundgedankens, die Lebensdauer, die Kinetik sowie bei Verwendung mehrerer sich unterschiedlich einfärbender phototroper Substanzen den Farbeindruck durch geeignete Ausbildung des reflexionsvermindernden Belags zu beeinflußen, die verschiedensten Modifikationen möglich sind.

Beispielsweise ist das erfindungsgemäße Schichtsystem nicht nur für phototrope optische Elemente mit einem Brechungsindex von etwa 1,5, sondern auch für Elemente mit einem höheren Brechungsindex brauchbar. Auch ist es möglich, anstelle der in den Beispielen angegebenen hochbrechenden Materialien die verschiedensten Materialien mit anderen Brechungsindices zu verwenden, sofern diese größer/gleich 2,0 sind. Auch können unterschiedliche hochbrechende Materialien in einem Schichtsystem verwendet werden.

Besonders vorteilhaft ist jedoch in jedem Falle die Einhaltung der erfindungsgemäß angegebenen Bedingung für das Dickenverhältnis. Es versteht sich jedoch von selbst, daß die angegebene Beziehung nur innerhalb gewisser, materialabhängiger Toleranzen erfüllt sein muß.

## Patentansprüche

1. Reflexionsvermindernder Belag aus mehreren Schichten für ein optisches Element aus organischem Material mit phototropen Eigenschaften dadurch gekennzeichnet, daß der Belag so ausgebildet ist, daß die über den Bereich zwischen 330 nm und 380 nm gemittelte Reflexion des Belags kleiner als 4 % und die über den Bereich zwischen 290 nm und 330 nm gemittelte Reflexion größer als 15 % ist.

2. Belag nach Anspruch 1, dadurch gekennzeichnet, daß die über den Wellenlängenbereich zwischen 330 nm und 380 nm gemittelte Reflexion kleiner als 2,5 % ist.

3. Belag nach Anspruch 1 oder 2, dadurch gekennzeichnet, daß die maximale Reflexion im Wellenlängenbereich zwischen 290 nm und 330 nm größer als 25 % ist.

4. Belag nach einem der Ansprüche 1 bis 3, dadurch gekennzeichnet, daß die maximale Reflexion im Wellenlängenbereich zwischen 330 nm und 380 nm kleiner als 5 % ist.

5. Belag nach einem der Ansprüche 1 bis 4, dadurch gekennzeichnet, daß der Belag mindestens fünf Schichten aufweist, die abwechselnd aus Siliziumdioxid und einem Material mit einem Brechungsindex $n_e \geqslant 2,0$ bestehen, von denen die erste direkt auf dem optischen Element aufgebrachte Schicht aus Siliziumdioxid besteht und eine Dicke von etwa $\lambda/2$ hat, daß sich die Dicken der zweiten, dritten und vierten Schicht wie

$$1 : [2*(X + 1,5*(n_e - 1,8))] : 20*Z/3$$

mit $X = 1,05 + (n_e - 2)^{1/(4-n_e)}$
und $X - 0,2 \leqslant Z \leqslant X + 0,2$
verhalten, und daß die Summe der Dicken der zweiten bis vierten Schicht ebenfalls etwa $\lambda/2$ ist, wobei die fünfte Schicht eine $\lambda/4$-Schicht ist ($\lambda = 350$ nm).

6. Belag nach Anspruch 5, dadurch gekennzeichnet, daß die erste Schicht in drei Teilschichten aufgespalten ist, die aus Siliziumdioxid, einem hochbrechenden Material und wiederum aus Siliziumdioxid bestehen, und daß die Dicke der mittleren hochbrechenden Schicht $\lambda/100$ bis $\lambda/50$ ist.

7. Belag nach Anspruch 5 oder 6, dadurch gekennzeichnet, daß das hochbrechende Material Neodymoxid, Titanoxid oder Terbiumoxid ist.

## Claims

1. Reflection-reducing coating of several layers for an optical element of organic material with photochromic properties, characterized in that the coating is designed so that the mean reflection of the film over the range between 330 nm and 380 nm, is less than 4 % and the mean reflection over the range between 290 nm and 330 nm is greater than 15 %.

2. Coating according to claim 1, characterized in that the mean reflection over the wavelength range between 300 nm and 380 nm is less than 2.5 %.

3. Coating according to claim 1 or 2, characterized in that the maximum reflection in the wavelength range between 290 nm and 330 nm is greater than 25 %.

4. Coating according to any of the claims 1 to 3, characterized in that the maximum reflection in the wavelength range between 300 nm and 380 nm is less than 5 %.

5. Coating according to any of the claims 1 to 4, characterized in that the film has at least five layers which consist alternately of silicon dioxide and a material with a refractive index of $n_e \geqslant 2.0$, and of which the first layer applied directly to the optical element consists of silicon dioxide and has a thickness of about $\lambda/2$, that the thicknesses of the second, third and fourth layers behave as

$$1 : [2*(X + 1.5*(n_e - 1.8))] : 20*z/3$$

with $X = 1.05 + (n_e - 2)^{1/(4-n_e)}$
and $X - 0.2 \leqslant Z \leqslant X + 0.2$
and that the sum of the thicknesses of the second to fourth layers is also about $\lambda/2$ with the fifth layer being a $\lambda/4$ layer ($\lambda = 350$ nm).

6. Coating according to claim 5, characterized in that the first layer is split into three partial layers consisting of silicon dioxide, a high-index material and again silicon dioxide, and that the thickness of the middle high-index layer is $\lambda/100$ to $\lambda/50$.

7. Coating according to claim 5 or 6, characterized in that the high-index material is neodymium oxide, titanium oxide or terbium oxide.

## Revendications

1. Revêtement diminuant la réflexion, composé de plusieurs couches pour un élément optique en matière organique à caractéristiques phototropiques, caractérisé par le fait que le revêtement est réalisé de sorte que la moyenne de réflexion du revêtement, calculée pour la gamme comprise entre 330 nm et 380 nm, est inférieure à 4 %, et celle calculée pour la gamme comprise entre 290 nm et 330 nm est supérieure à 15 %.

2. Revêtement selon la revendication 1, caractérisé par le fait que la moyenne de réflexion calculée pour la gamme de longueurs d'ondes comprises entre 330 nm et 380 nm, est inférieure à 2,5 %.

3. Revêtement selon la revendication 1 ou 2, caractérisé par le fait que la réflexion maximale dans la gamme des longueurs d'ondes comprises entre 290 nm et 330 nm, est supérieure à 25 %.

4. Revêtement selon une quelconque des revendications 1 à 3, caractérisé par le fait que la réflexion maximale, dans la gamme des longueurs d'ondes comprises entre 330 nm et 380 nm, est inférieure à 5 %.

5. Revêtement selon une quelconque des revendications 1 à 4, caractérisé par le fait que le revêtement est composé d'au moins cinq couches consistant alternativement en dioxyde de silicium et en une matière ayant un indice de réfraction $n_e \geqslant 2,0$, dont la première couche appliquée directement sur l'élément optique consiste en de l'oxyde de silicium possédant une épaisseur de $\lambda/2$ environ, que les épaisseurs de la seconde, troisième et quatrième couche se comportent comme :

$$1 : [2*(X + 1,5*(n_e - 1,8))] : 20*Z/3$$

avec $X = 1,05 + (n_e - 2)^{1/(4-n_e)}$
et $X - 0,2 \leqslant Z \leqslant X + 0,2$
et que la somme des épaisseurs de la seconde jusqu'à la quatrième couche est également d'environ $\lambda/2$, la cinquième couche étant une couche $\lambda/4$ ($\lambda = 350$ nm).

6. Revêtement selon la revendication 5, caractérisé par le fait que la première couche est subdivisée en trois couches partielles, composées de dioxyde de silicium, d'une matière à indice élevé de réfraction, puis de nouveau de dioxyde de silicium, et que l'épaisseur de la couche moyenne à indice élevé de réfraction est de $\lambda/100$ jusqu'à $\lambda/50$.

7. Revêtement selon la revendication 5 ou 6, caractérisée par le fait que la matière à indice élevé de réfraction consiste en oxyde de néodyme, en oxyde de titane ou en oxyde de terbium.

Fig 1

Fig.2

Fig.3

Fig. 4

Fig. 5